# EUROPEAN PATENT SPECIFICATION

(11) **EP 3 869 778 B1**
(45) Date of publication and mention of the grant of the patent: **18.03.2026**
(21) Application number: 21158202.8
(22) Date of filing: 19.02.2021
(51) Int. Cl.: G06T 11/00, G06V 20/20, H04N 23/63, H04N 23/80, H04N 5/77

(54) **AUGMENTED PAPER PHOTO ALBUM**
AUGMENTED REALITY PAPIERFOTOALBUM
ALBUM PHOTO SUR PAPIER AUGMENTÉ

(30) Priority: 21.02.2020 IT 202000003707
(43) Date of publication of application: 25.08.2021
(73) Proprietor: Toma, Francesca, 00124 Roma (IT); Cordaro, Emanuele, 00124 Roma (IT)
(72) Inventor: FORGIONE, Raffaele, 00146 Roma (IT)
(74) Representative: Emmi, Mario

(56) References cited:
- EP-A2- 0 902 589
- GB-A- 2 246 933
- US-A1- 2006 038 833
- US-A1- 2010 262 911
- US-A1- 2013 281 208
- US-A1- 2014 253 743
- US-A1- 2016 203 645
- US-A1- 2016 371 890
- US-A1- 2017 206 711
- US-A1- 2018 025 752

## Description

### Scope of the invention

The present invention relates to the technical sector of the capture of images and their processing.

In particular, the invention refers to an innovative method which allows display, through the camera of a mobile device, of a static real image, for example a paper photograph, and with the mobile device programmed to animate said image in real time in order to create an Augmented Photo Album.

### Overview of the prior art

In the current state of the art, mobile devices, such as tablets or mobile telephones which are capable of performing multiple operations, are known and commonly used.

For example, all these mobile devices are equipped with one or more cameras in order to be able to acquire images in the form of photos and/or videos which are then stored in a memory module on the device itself.

There are also multiple software applications (i.e. *apps*) that are pre-installed in the memory of the mobile device or which can be downloaded from the internet and which allow these images to be further processed for the most diverse reasons and in the most divers of ways.

For example, in the current state of the art, technologies are known that allow images to be animated in some manner (for example, Apple *"Live Photo"*)*.* Basically, a static image is somehow "animated", i.e. set in motion.

In this case, the images that are animated are however only and exclusively virtual images which have been previously captured by the camera and are therefore stored in the memory of the device in question (as they could also be in memory in a "cloud"). A succession of these images obtained with a sequence of shots made by the software itself, following the single shot taken by the user, can all later be compacted in a single file that creates the moving image effect.

Many of these latest generation mobile devices are also able to support what is called "augmented reality", in which through special applications, currently commonly available, the mobile device is able to integrate or delete objects in an image of the mobile device, thereby modifying and "augmenting" the image.

Although there are applications such as Apple "Live *Photo",* and although modern mobile devices support augmented reality, it is not currently possible to animate, in real time, real images which are framed in real time through the cameras provided in the device and simply displayed live on the screen of the said mobile device.

The real images that we see live through the mobile device's screen, by means of framing by the camera that is turned on, remain 'as is' and are not editable. The only feasible action, as mentioned, is to start the video recording and/or capture of one or more photos or a sequence of photos in a certain time and then process them subsequently. Subsequent processing allows an in-motion display of the original virtual image.

The problem is particularly evident in the case of paper photos printed from a video previously captured via a mobile device.

The user makes a video and can, for example, print some frames of the video in paper form, in order, for example, to create and keep a paper album.

This is not possible in the current state of the art, i.e. no software application exists that is capable of displaying the printed image on the screen in real time and animating it live during framing, so that the user, by framing the real image with the device's camera, may display on the mobile device's screen the same image that is being animated.

This therefore puts a major limitation on the image animation functions, limiting the known art to the animation of virtual images but not of paper photo albums.

The following additional documents US2016/203645 and US2010/262911 are also known.

### Summary of the invention

There is therefore a need for a technical solution allowing to solve the above-mentioned technical problem, making it possible to make the image animation system much more versatile and flexible, thereby also allowing images that are displayed in real time on the mobile device's screen to be animated while they are being framed in real time.

These and other objects are accordingly achieved with the present method for animating a printed and framed image in real time with a mobile device, according to claim 1.

This method includes the following steps:
- Provision of a mobile device (10) equipped with a lens and a video screen (20) to show in real time images (IMM) which are framed through said lens;

The mobile device can for example be a smart mobile phone or a tablet, as they are equipped with a camera, a video screen and a processor capable of processing information.
- Accordingly, a step is provided of shooting a video file through said mobile device and the subsequent storage of said video file;
- Once the said video has been produced, a step of generating a frame (Frame_0) from said video file then follows: the frame generated is associated with said video from which it is taken;
- Preferably, the frame generated by the video is precisely the first frame comprising the video, i.e. the video's instant 0 frame.
- A printing of said frame then follows;
- At this point, after printing, a real-time framing operation of said print through the lens of the mobile device follows, after which the framed image is processed in real time in order to identify the print (PRINT_1) framed inside the full real image (IMM) and create a transparent virtual layer (Lay_virt) which is superimposed on and fastened to the print framed inside the full image;
- Once the transparent virtual layer has been fastened, there is a fixed reference;
- Identification of the video associated with the said frame from which the said print is taken then follows, and a further layer is created which is superimposed on the transparent layer but which this time is instead visible;
- This layer is a video layer (Lay_vid) which is created and superimposed on said transparent virtual layer (Lay_virt) ;
- The video layer created is obviously the one associated with the printed frame and is superimposed in such a way that its first overlaid frame coincides perfectly with the frame printed and framed, i.e. the video's instant 0 frame;
- The video layer (Lay_vid) activates the sequence of frames (frame_0, frame_1, ..., frame_n) that comprise it and which are scrolled in succession, being superimposed one by one in succession on the said virtual layer (Lay_virt) in such a way as to generate animation of the framed paper print (IMM_1);
- The first instant 0 frame coincides with the framed print so the user does not see any change. Once scrolling of the following frames begins, animation takes place.

In accordance with the solution proposed in claim 1, it is now possible to animate any image that is simply framed by the camera and therefore visible live on the screen.

For example, a user wishing to animate a photo in a paper album can place the photo on any support, on a table for example, and frame it through the camera of his mobile device (for example a tablet, or smartphone).

The user will display the image he is framing live on the screen and, by launching the appropriate software application, the mobile device's processor will be able to process a "live" animation of the image framed in real time.

The user, seeing the image of the object he is framing live on the screen, will therefore see an animation, even though the object obviously remains still.

The proposed solution therefore provides for the advance production of a video, while the image that is animated is the print of a frame of this video, the initial frame (at instant 0) of the video.

This allows the video to be superimposed correctly on the framed image to create the animation.

More specifically, the user can now animate printed images that come from a video shot previously.

From the video produced, a frame is printed which, when framed, can be animated.

The user can thus animate prints deriving from videos he has produced with his mobile device.

Advantageously, the said step of creating the transparent virtual layer (Lay_virt) comprises a step of recognizing the print framed inside the full image; said recognition occurs through a comparison made between a virtual image saved in the memory of the mobile device and said framed real image (IMM_1).

In this way, through this recognition, it is possible to identify the framed print inside the full image and therefore it is possible to extrapolate dimensions and coordinates from which to correctly create the transparent layer, i.e. of correct size, and place it in the right position inside the real image so that it is perfectly overlaid on the object it corresponds to inside the real image.

Advantageously, in particular, following said positive recognition, a tracing step is provided which allows the dimensions of the print framed inside the full image to be determined together with its spatial coordinates (X; Y; Z) in such a way as to create the said transparent virtual layer having the same dimensions as the print, recognized in the previous step: this virtual layer is then fastened above the said image.

The application now creates and clips a transparent virtual layer (lay_virt) to the print framed in real time, although the image as a whole may contain other objects in the frame in addition to the above-mentioned print.

The transparent layer therefore becomes a fixed reference to which may now be clipped the video layer, which instead is not transparent but overlays the print that corresponds to the initial instant 0 frame.

The application then clips the video layer (lay_vid) that is generated by the video associated with the image and starts playing the video above the real photo, obtaining the final effect of the print coming to life, making the frames scroll in succession at the various moments taken from the video.

The transparent layer and the video layer are generated with known art layer generation technologies.

The first frame of the video coincides with the printed and framed frame while the following frames are different images that determine the movement.

The user, therefore, must first prepare the video via his mobile device, the application will create and save the initial frame of any video in a directory and it will be possible to print this first instant 0 frame. This print will be animated as described above in summary.

Preferably, on opening the app, the user can be directed to choose an album pointing to a directory present in the memory of the device being used, where the images taken previously from the relative video recordings made by the user are stored. If the user deletes the app and loses the data, these images can be recovered from the network inside the remote folder in the Cloud.

The user then selects a photo album in the app and then activates the camera provided in the device.

In this way, through this activated camera, the user is able to view the real world he is framing with the camera on the video screen of his mobile device. No image capture is required at this stage since the animation process, however detailed, is carried out precisely on a specific image framed in real time by the camera, i.e. the printed image preferably of the first instant 0 frame, which can preferably be printed on paper but also on other media.

Compared to the prior art which consisted of the above-mentioned "Live Photo" (Apple), further advantages are shown in the table below:

| | **Live Photo** | **Present invention** |
|---|---|---|
| **Animated object** | Virtual photograph | Real paper photograph |
| **Duration of animation** | Limited (a few seconds) | Variable |
| **Real-time filters** | No | Yes |
| **Audio** | No | Yes |

Advantageously, the said virtual layer generated has the same length and width dimensions as the framed print.

Advantageously, the said video layer (Lay_vid) is generated from the video produced which is identified through the association that exists between the said video and the frame from which it is taken, following positive recognition.

Advantageously, following superimposition of the video layer on the transparent layer, the first frame of the video (Frame_0) coincides with the printed and framed frame, so as to perfectly overlay it.

Advantageously, the scrolling of the subsequent frames results in animation.

Advantageously, a further filter layer (Lay_fil) can be further provided which is generated and superimposed on the video layer (Lay_vid) in such a way as to generate a predetermined effect in playback of the animation, for example a certain coloring or the application of a cartoon bubble.

Also described here is a mobile device, preferably a smart mobile telephone or a tablet, having a processor programmed to be able to process and carry out the steps of the method in accordance with what has been described above.

Also described here is a software program comprising instructions which, when the program is run by a mobile device, determine execution of the steps of the method in accordance with what has been described above.

### Brief description of the drawings

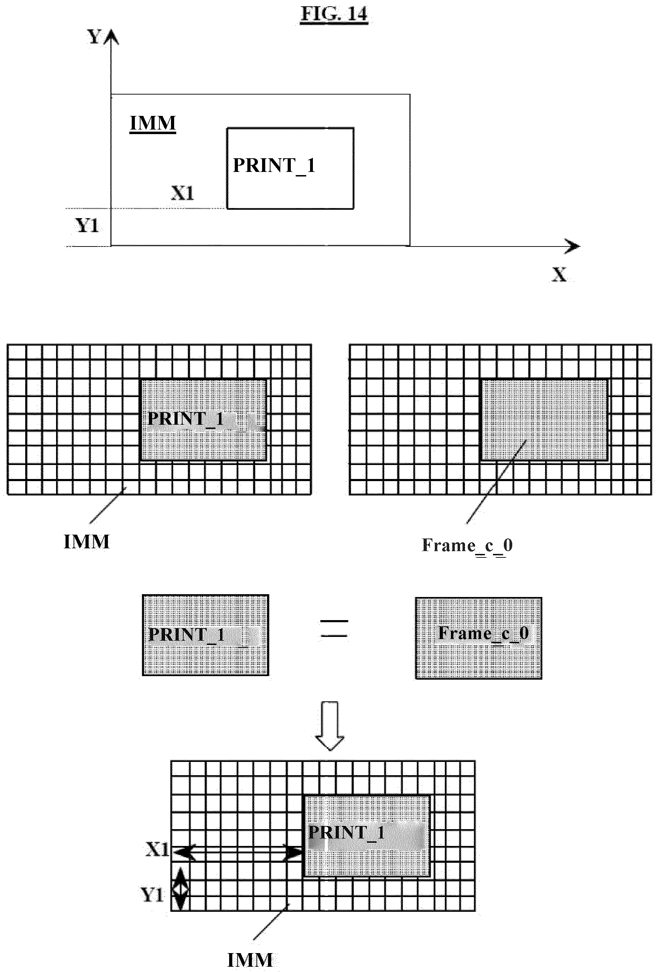

Further characteristics and advantages of this method, according to the invention, will become clearer with the description that follows of one of its embodiments, given by way of example and in no way exhaustive, with reference to the attached drawings, where:

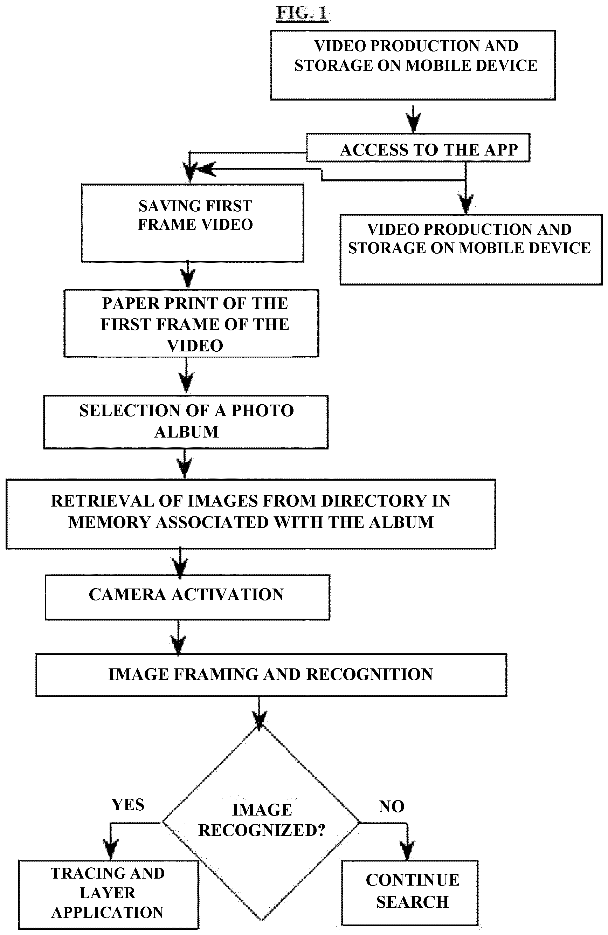

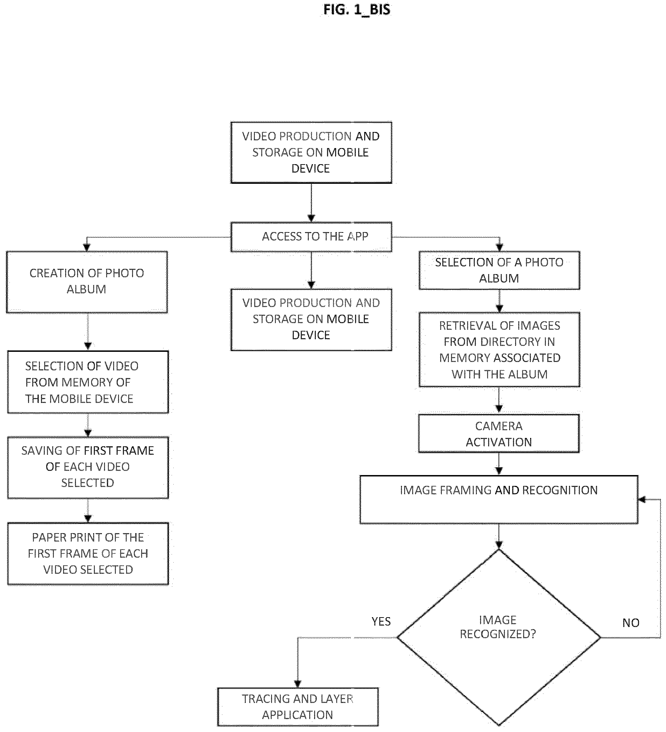

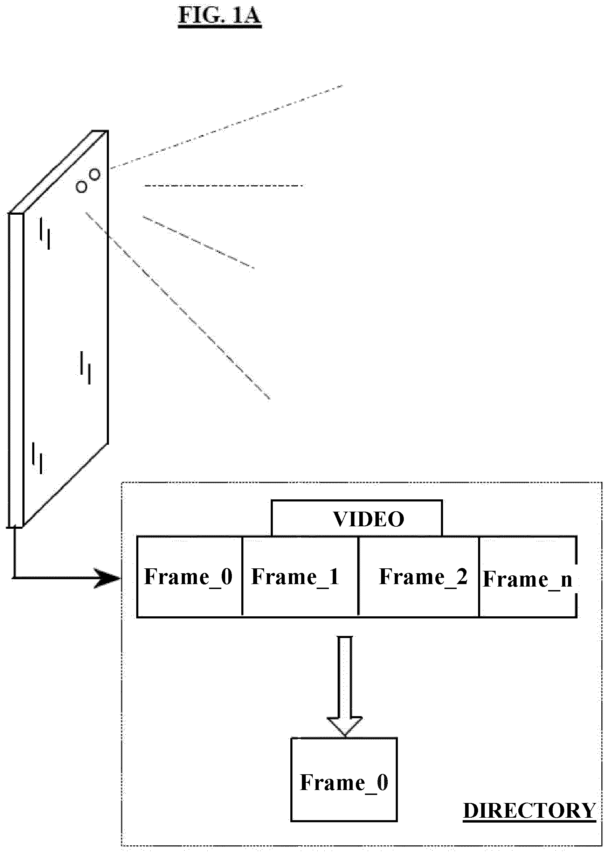

- Figure 1 shows a flow chart which highlights some of the steps of the present method, according to the invention;
- Figure 1Bis is the same flow chart as figure 1, which better reflects the functionality of the method; both figure 1 and figure 1_Bis show a step of video production and storage on a device that can take place before accessing the app, or after accessing the app, implying that the video can be produced with any device and at any time or it can be produced following access to the app of the specific device and therefore by way of the app and with the device on which said app runs;
- Figure 1A is a schematic view of a step of capturing a video with the mobile device; the video is stored and processed in order to extrapolate from it the first frame (Frame_0) comprising this video at the initial instant (t=0) of the video and storage of this frame which is associated with said video;
- Figure 2 and figure 2A detail a step of recognizing the image displayed on the screen in real time;
- Figure 3 shows an explanatory diagram of an initialization step of the present method;
- Figure 4 details a step of recognition and subsequent tracing of the image shown on the screen;

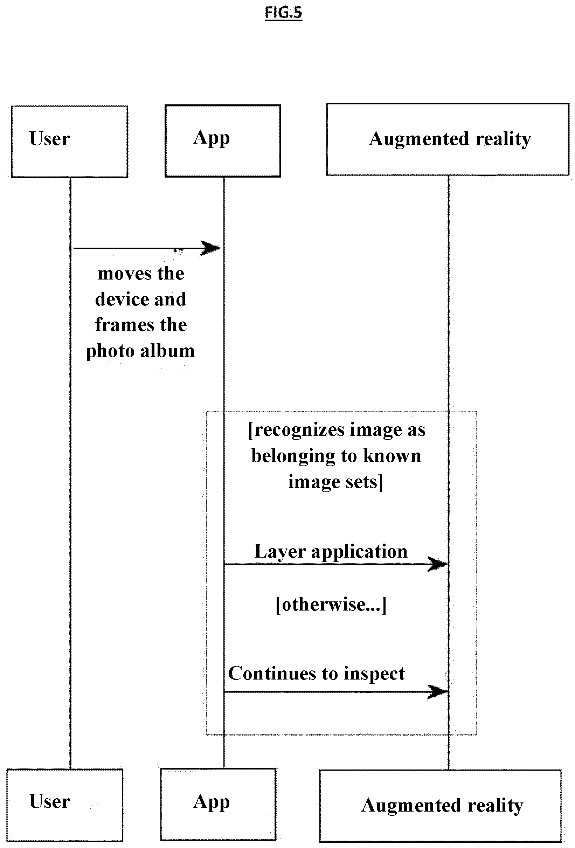

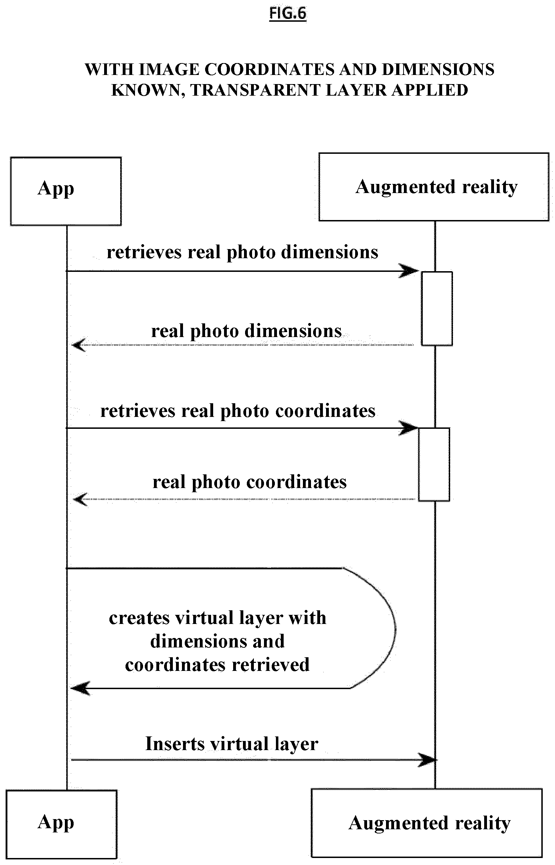

- Figures 5 to 7 show the step of image recognition and of application on the real image of a layer identical in size to the displayed image and overlaid on the real image within augmented reality;

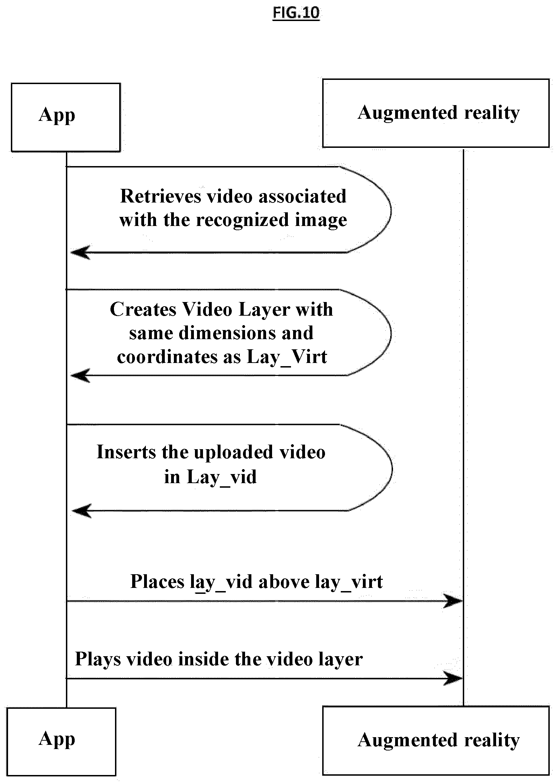

- Figures 8 to 10 show a further step of overlaying the frames of a video on the initial image in order to create animation of the image recognized by the application;
- The sequence of figures 11 and 12 shows said overlaying of the video;
- Figure 13 shows a further diagram in which a last possible, but optional, overlay is described, in order to create filters, for example of different colors or effects on the framed image;
- Finally, figure 14 is a schematic view of a possible comparison technique between the print image captured in real time and the frames in memory extrapolated from the videos in order to identify a correspondence between a frame and the image framed in real time and thus be able to identify, within the image framed in real time, the area of the image corresponding to the print to be animated.

### Description of some preferred embodiments

Figure 1 (and figure 1_Bis) shows a flow chart describing the operational/software method, according to the invention.

In particular, provision is made for a mobile device, which can be a new generation mobile telephone, a smartphone, or a tablet for instance.

These mobile devices are small in size, specially made to be easily transportable and are equipped with powerful processors for processing information in general.

They can normally be connected to the internet to download information and software applications that can run on said mobile device.

Such mobile devices, well known in themselves in the sector art, are also provided with one or more cameras (there are many types of varying resolution) in order to frame images and then take photos and/or videos that can be stored in the memory of the mobile device or in the cloud.

Obviously all these mobile devices are equipped with a screen to display any image and allow operation by the user.

Such devices are in themselves well known in the sector art, they are commonly available on the market and are therefore not further detailed herein.

Management of this operating method is therefore carried out by a specific software program which may be originally present in the memory of the mobile device or can be downloaded from the internet in the form of a software application (app).

The processor of the mobile device can run the software, correctly performing the necessary processing operations.

The main steps, which will be detailed below, involve the advance production of a video which is then processed by the software application to extrapolate a frame, the first frame comprising the video at instant t=0, so extrapolating frame_0 for t=0.

The frame is saved in a directory in the memory of the mobile device and the frame, i.e. frame_0 for t=0, is associated with the specific video from which it is taken.

Figure 1A is a schematic diagram of a mobile device, for example a mobile telephone, which acquires a video comprising a succession of frames from instant 0 onwards and from which the initial frame is extrapolated at instant 0.

Both are saved in the device memory or in a directory in the cloud.

Obviously, if several videos are made, the software application will process several frames at instant t=0, each associated with the relative video from which it is taken.

In accordance with the invention, as better clarified in the following technical detail, it is possible to print the frame generated from the video, i.e. the frame_0 at the instant t=0, in order to be able to frame this print in real time with the camera and see through the mobile device's screen, in real time, the print that is animated, exploiting the associated video that had been previously produced and from which the said frame_0 at instant t=0 is taken.

A problem that is solved, as described below, concerns the fastening of the video on the image of the print framed in real time since, to do this, coordinates of the framed print inside the complete frame are required. In fact, the complete shot generally does not frame only the print but also surrounding objects according to the framing that the user makes.

The flow chart of figure 1 represents some operational steps in a slightly more specific way, even if these will be discussed even more specifically in the continuation of the description.

According to the operating steps shown in figure 1, the following operations are present.

The user can produce a video in advance which is only subsequently processed by the software application, i.e. when the application is launched.

Alternatively, the user can access the software application and produce the video through the same mobile application.

The two are equivalent.

As shown in the flow chart of figure 1, once the video that is stored has been made, the following steps are carried out.

The software application, object of the invention, extrapolates from the video a frame at the initial instant of the video t=0, i.e. the first frame of the video.

The frame thus created is now automatically saved in a directory in the device memory (and possibly in a cloud folder), so as to be recoverable when needed by the software system.

Therefore, according to what has been described up to now, the video is present in memory and so also is the single instant 0 frame taken from this video and therefore associated with this video.

The application automatically allows this first frame of the video at instant 0 (frame t_0) to be printed on a paper medium, for example through an online print service or in other equivalent ways.

The user can in any case, however, print this first frame extrapolated from the video and print it on paper medium or on any medium, provided that it can obviously be framed through the lens of the mobile device.

At this point, once the printed image is ready, on paper medium for example, it can be framed live by the lens and animated live while it is being framed.

The animation basically provides for a superimposition of the video taken from the printed image but, to do this, it is necessary to fasten the video to the image of the real framed print, which is inside a main image shot live and which can contain other objects (the frame is generally larger than the object that it is desired to frame).

For this purpose, a step of recognition and tracing is provided precisely in order to identify the print framed inside the full image (which occupies the full mobile device's screen), all by using the stored frame from which the print that is to be framed has been taken.

In particular, as indicated by the flow diagram of figure 1, the user is required by the software to select a photographic album present in the memory where the saved images are present, i.e. the frame_0 of each of the various videos.

For example, if numerous videos have been produced over time, these will all be in memory and associated with the relative frames also in memory in a certain directory. The user is required to select the photo album relative to the printed photo, in particular to select the correct directory relative to the printed photo.

This selection of the album, or selection of a directory, facilitates the calculation operation but could also not be carried out and the software could search and analyze the entire memory.

At this point the camera is activated and the user can frame the real world and therefore the real image, and in particular the printed image.

Obviously the frame will capture not only the printed image but also what in the real world is around the said printed image.

If, for example, the paper support is placed on a table, the shot could frame any other objects present.

It is therefore necessary to animate the printed image only, excluding the surrounding environment that may be present.

To do this, as shown in the flow chart of figure 1 or 1_Bis, it is necessary to identify the print in the framed image and for this reason an image recognition operation is performed using the relative frame_0 in memory.

This makes it possible to identify and therefore locate, in real time, inside the framed real image, which may contain other objects, the shape and figure of the print to be animated by comparing it with the frame from which it has been taken.

More specifically, the app loads in the RAM the set of photos associated with the selected photo album and performs an *"image recognition"* in order to find the frame of instant t=0 which coincides precisely with the real image on print framed live.

If the image is recognized, it is then possible, with a special algorithm, to carry out a tracing that finds the positioning coordinates and the dimensions of the print in the real frame, and to arrange for a subsequent application of layers that animate the print in the real frame.

The recognition therefore serves, as clarified below, to identify the print in the frame and build a transparent virtual layer of the correct size which can thus be fastened on the real print in a certain position inside the framed real image, thus excluding any other elements present in the image.

The video that animates this print is then fastened and therefore superimposed on the virtual_layer, once it has been fastened to the print taken in real time inside the complete real image.

The video is therefore also processed in the form of a video layer with known techniques, and fastened to the transparent layer.

The recognition also serves to identify, among possibly various videos, the correct video to be superimposed as the positively recognized frame in memory is also associated with the related video.

In fact, once the real photo has been recognized, that is, once correspondence has been found between the frame at instant 0 (e.g. foto_1.png) preloaded on the device memory or downloaded from the cloud and the image of the framed real print, the app retrieves from the memory of the mobile device itself the video associated with this frame which has the same name as the photo but with the extension mp4 (photo_1.mp4 based on the example of the name provided for the image), in order to generate the animation.

### IMAGE RECOGNITION STEP:

The image recognition step and its technical function are technically detailed below, in a more precise way.

What is framed by the camera in real time is processed by the processor in real time, through the said software application, in such a way as to check if at least part of what is framed in real time (in particular, the print) corresponds to a certain frame present in the directory, taken from a video and associated therewith.

An image recognition algorithm can be used for this purpose.

The image recognition algorithm is in itself known art and there are many applications (algorithms, generally) serving this purpose. They can, for example, work through a pixel brightness analysis, once an image is transformed into a matrix of pixels with each pixel having a certain coloring.

If the image is positively recognized, i.e. the print framed by the camera inside the complete framed image corresponds to one of the images in the directory, then it is possible to carry out a tracing step, i.e. a step in which the positioning coordinates and the dimensions of the print framed inside the real image can be determined and, consequently, it is possible to generate a layer of the correct size, or a virtual layer, which can, at this point, be correctly superimposed on the framed print, located and geometrically defined inside the full image framed by the camera of the mobile device.

The recognition is useful in order to be able to correctly generate and also position the transparent virtual layer in the right position, so that it correctly overlaps the print framed inside the real image, moreover creating a layer of the correct size that traces that of the image printed and shot in real time.

Dimensions of the transparent layer and the framed print are in fact identical, meaning that they are overlaid perfectly.

On the other hand, if this positive recognition does not occur, the software continues the search because, in theory, it would not be able to create and position the transparent layer correctly.

In such a case, the user will move his/her mobile device framing the real world while the processor processes what is framed in real time in order to carry out the above-mentioned recognition step by comparing the framed image with the images present in the memory directory associated with the album chosen by the user in the app. If recognition does not occur, the animation is simply not processed.

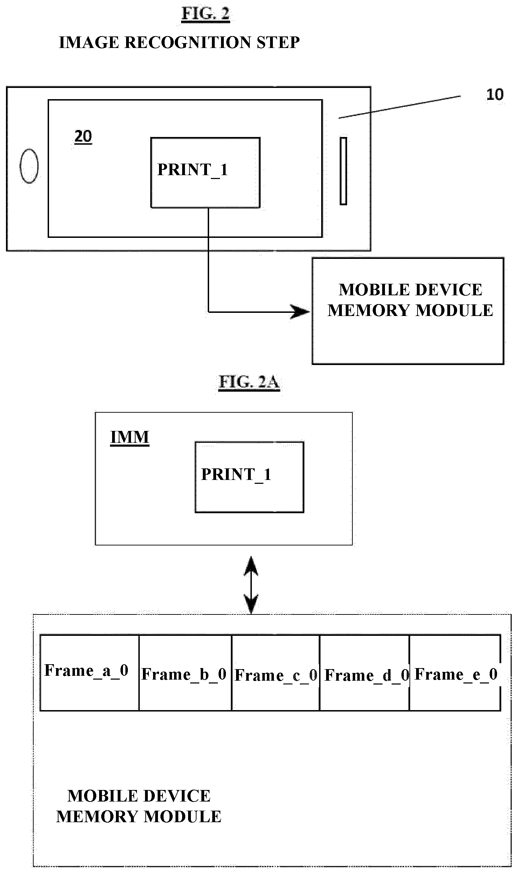

The image recognition step is better detailed with reference to figures 2 and 2A, in which a mobile telephone 10 has been schematized (similarly for any mobile device in general), having a screen 20.

By means of the camera, or rather the lens, provided in the mobile telephone (not visible in figure 2 for simplicity's sake) the user displays on the screen 20 the real image (IMM) which contains, in addition to any other objects not shown for simplicity's sake, the print (PRINT_1) of what is intended to be animated. In this case, what the user intends to animate has been schematized as (PRINT_1) and corresponds to the printed image of the first instant 0 frame of a certain video placed within the complete frame (IMM) in real time.

The image displayed live on the screen (i.e. IMM as indicated in figure 2A) is processed by the processor which compares this real image (IMM) in full with the set of images in the memory (i.e., present in the memory module of the mobile device or downloaded from the cloud) and which the system has previously extrapolated from the videos, obtaining the single frames at instant t=0, as reported above.

As schematically indicated in figure 14, the software can, for example, transform the complete framed image (IMM) into a matrix of pixels (for this, see figure 14 of the IMM image in the form of a grid representing the matrix of pixels inside which is the framed print highlighted by a different coloring of pixels). The software performs a comparison with the matrix of pixels of the frames stored (see the grid of frame_c_0).

If there is a substantial equivalence of colors between the two compared matrices, then frame_c_0 matches at least a part of the matrix of the image (IMM), this means that there is a brightness correspondence, i.e. the matrix of the frame's pixels are the same as a portion of the matrix of pixels within the image.

At this point the area corresponding to the Print (print_1) within the matrix (IMM) has been identified and therefore it is easily possible to identify dimensions and coordinates, for example by counting the pixels that make up the width and height of the print (print_1) to obtain its dimensions and by counting the pixels of distance X1 and Y1 (see also figure 14).

Therefore, as shown in the schematic of figure 2A, the real image (IMM) less any other possible objects is compared by the processor with the images in the directory associated with the album selected and which in figure 2A are indicated as Frame_a_0, ..., Frame_e_0 and which are, each one, a frame of a video at instant t=0.

The recognition step is therefore important as it allows, as already said, a "transparent layer" to be created which is superimposed, in augmented reality and fastened to the real image shot live augmenting the reality framed by the device's camera.

However, in order to create a transparent layer to be positioned correctly on the real image, this comparison or recognition operation is necessary to determine the positioning and sizes of the print in the real image.

The pixel analysis technique, introduced above as a non-limiting example, could be considered one possible image recognition technique, even if other recognition techniques are implementable.

Once the framed image relative to the print has been positively recognized, i.e. when similarity is found between a frame_0 in memory and the print framed inside the full image from the camera of the mobile device, the processor is able to extrapolate dimensions and coordinates such that the transparent virtual layer is created and correctly fastened to the real print in augmented reality.

During this processing step, the user will not be aware of the "creation" or "generation", by the software system, of this "transparent" layer precisely because it is transparent and is superimposed on the live image which was positively recognized, without obscuring it.

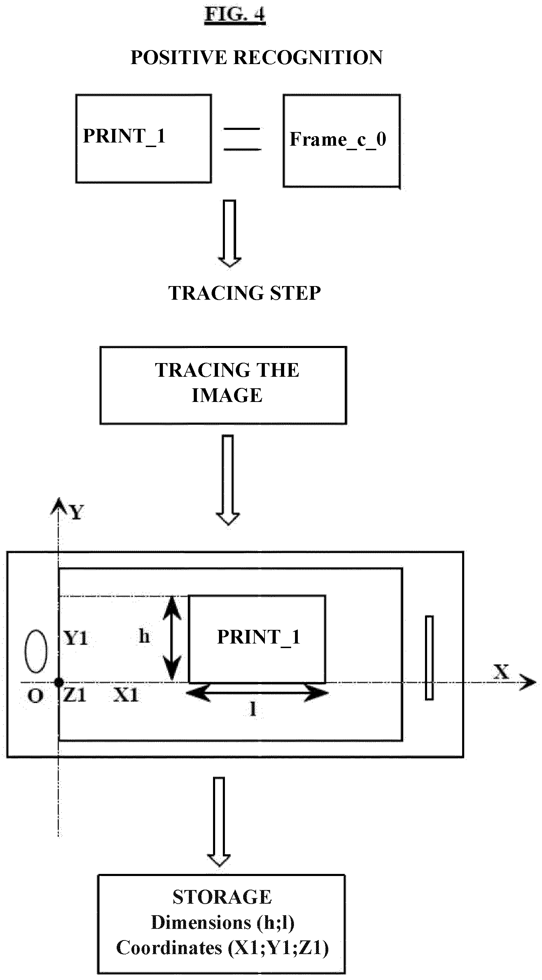

Figure 4 further shows precisely the said step of tracing the framed print within the image in which, precisely because of the correct recognition, the software can determine the correct spatial coordinates (X; Y) of the framed object in real time and an elevation Z which must be greater than the z of the real image, so that the transparent layer is on top of the real image.

These coordinates and measurements are obtained through the augmented reality framework of the specific operating system: for example ARCore for Android, ARKit for iOS.

Figure 4 thus shows the Cartesian axes (X; Y; Z) with the detected coordinates (X1; Y1; Z1) of the framed image (obviously after it has been positively recognized) and with the relative length (l) and height (h) dimensions.

Positive recognition therefore allows determination of the measurements (l; h) that are highlighted in figure 4 and the spatial coordinates. At this point everything is ready for generation and fastening of the virtual transparent layer (lay-virt).

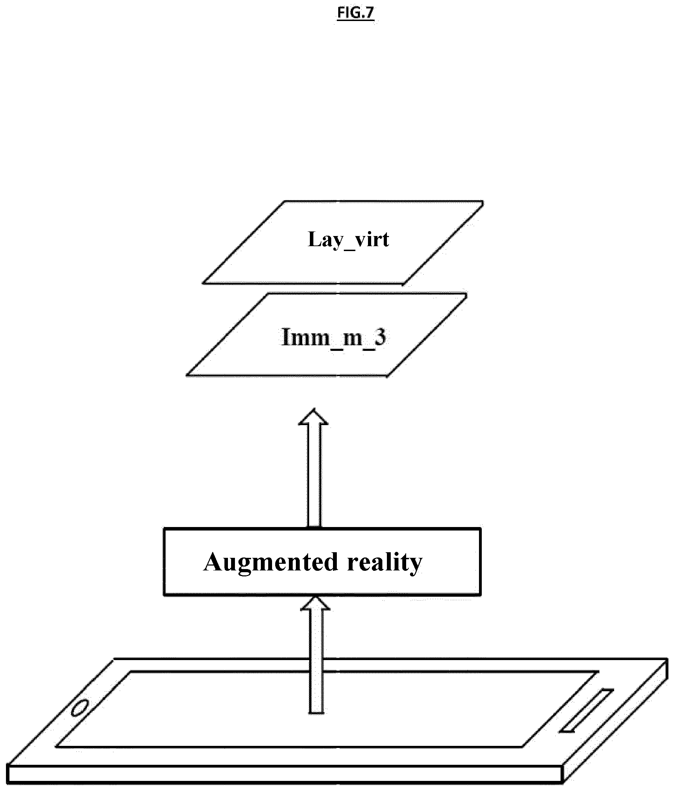

Figure 7 shows the superimposition of the transparent virtual layer on the framed image.

From what has been said, these measurements and this step of calculating the measurements and the position are used to create and then perfectly superimpose the transparent layer (lay_virt) on the framed print inside the real image (IMM) so that an augmented image is created, by way of this superimposition. Therefore, the coordinates (X, Y, Z) and the dimensional measurements introduced above are used to create a transparent image of the same size as the real image and which can be perfectly superimposed on the real image (the print).

The transparent layer is important in that it serves as a fasten, i.e., as a placeholder for subsequent animation layers. This layer is therefore used to trace the real image in augmented reality.

This is necessary because the real image moves during shooting, even slightly, while the transparent layer applied above, once generated, remains fixed in the determined position.

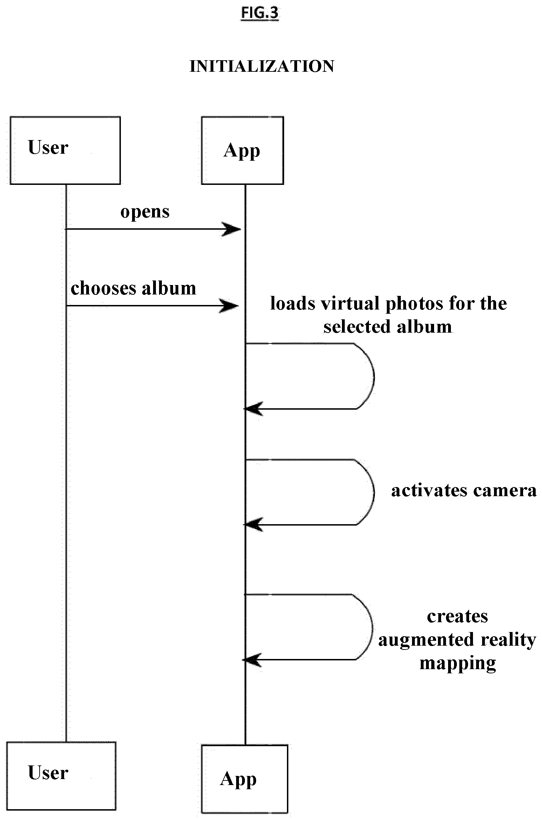

Figure 3 is an excellent illustration and summary of what has been described up to now.

Figure 3 is, in fact, a block diagram showing the interaction of the user with his mobile device on which this software application is present and therefore illustrates the interaction between user and application.

The user opening the application is asked to select an album of preloaded virtual images, i.e. created previously and stored in the device.

Photos can be downloaded remotely but only when the app is opened. So, when the user selects an album, the photos are already in memory (either because they were there already before the app was opened, or because they were downloaded when the app was started).

The image must be the one relating to the object that is intended to be animated, so if the user wants to animate a paper photo, he must first acquire the video of the object in motion and stored in such a way that, when the app is started, it is sent back to the directory, allowing selection of this image taken from the video.

The system then proceeds with a mapping step that provides for the above-mentioned image recognition, tracing of the image and creation of the transparent layer that is applied to the image framed.

The image is traced through the transparent layer that is applied to the image framed by the camera.

### ANIMATION STEP:

Once the transparent virtual layer, i.e., Lay_virt, has been superimposed, the next step is the animation step using the video associated with frame_0.

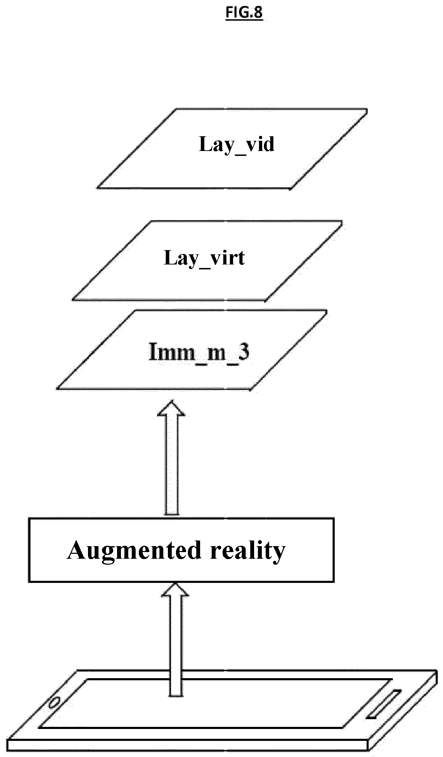

The overlaying, frame by frame, of the video generates the animation and this is highlighted in figures 8, 9, 11 and 12 where overlaying of the generated video layer on Lay_virt can be seen.

Lay_virt is a tracing frame that is created once for each print, recognized by the image recognition algorithm, during the augmented reality session and is deleted at the end of the augmented reality session. The video layer (lay_vid) is created (i.e. generated) from the video and superimposed whenever the real image is recognized.

In one example:
camera frames photo_1;
app recognizes foto_1 and generates and fastens lay_virt_1;
app clips lay_vid_1 and starts playing the video;
user moves the device;
camera frames photo_2;
app recognizes foto_2 and clips and fastens lay_virt2;
app removes lay_vid_1 from augmented reality;
app clips lay_vid_2 and starts playing the video.

The video layer is removed every time as it takes up space in RAM and, having several of them may lead to the application crashing due to running out of memory.

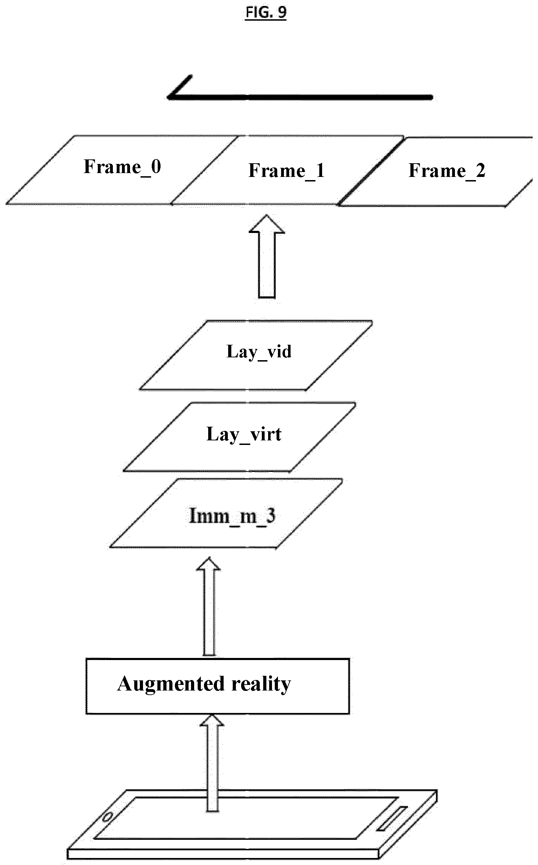

The video (i.e. the content of Lay_vid which is superimposed on the virtual layer), as shown in figure 9, is of itself formed by a succession of frames, the scrolling of which in the lay_vid generates the animation.

In this sense, as instants pass, the frames are scrolled and, in succession, each of them is overlaid on the virtual layer, creating the animation effect.

Then, while they are being overlaid in succession, as shown in figures 8 and 9, the video frames generate animation of the image.

In particular, the video frames are not superimposed, but are alternated. So at the instant t=1, frame_1 must replace frame_0 at instant t=0; at instant t2, frame_2 replaces the previous one (frame_1), etc. Each of these frames at various instants (t0, t1, t2, etc.) is superimposed on the transparent layer in temporal sequence, i.e. the frame at instant t0 is superimposed on the transparent layer and then removed and replaced by the frame at instant t1, and so on.

The superimposition therefore further augments what is already augmented reality as the virtual layer is now superimposed on the framed image (IMM) in correspondence with the framed print and the various frames of the video are alternated above it, in succession.

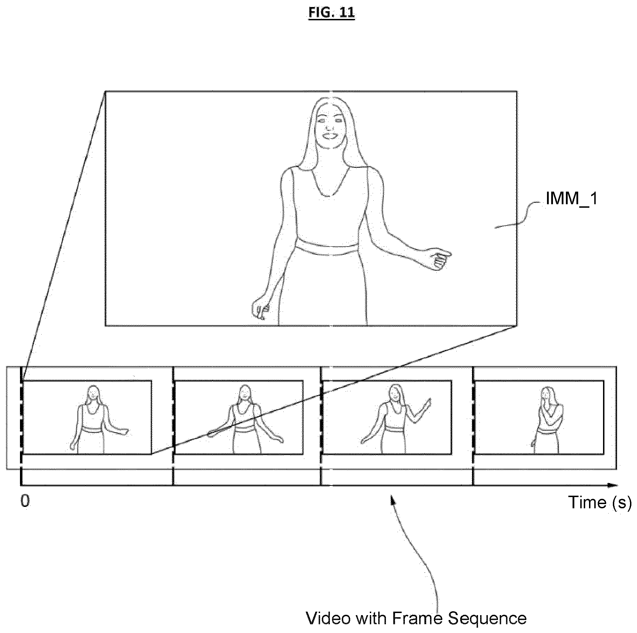

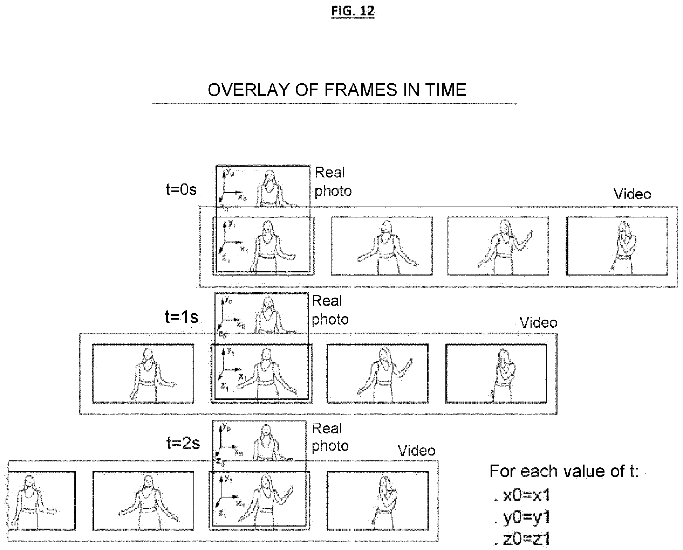

Figure 11 shows, in fact, the framed image (IMM), on which the transparent Layer is superimposed and, above it, the sequence of frames which, as shown in figure 12, alternate in succession on the image (IMM) at different instants, thus creating the animation.

It would still be possible to fasten the video directly to the real image without going through generation of the reference transparent layer.

However, this is not advisable as it increases the complexity and overloads the software, diminishing its performance: applying the video layer directly to the real image would mean that, for each new image, the video layer from the previous image would have to be removed and therefore the reference to the image previously animated would be lost.

The virtual layer, on the other hand, maintains this reference even though it is not very heavy, and therefore does not overload the RAM of the device.

Conversely, every time a new image is animated, the video layer from the previous image is removed, because the video layer takes up a lot of space in RAM and having too many instances of the video layer causes the application to crash.

### FILTER APPLICATION:

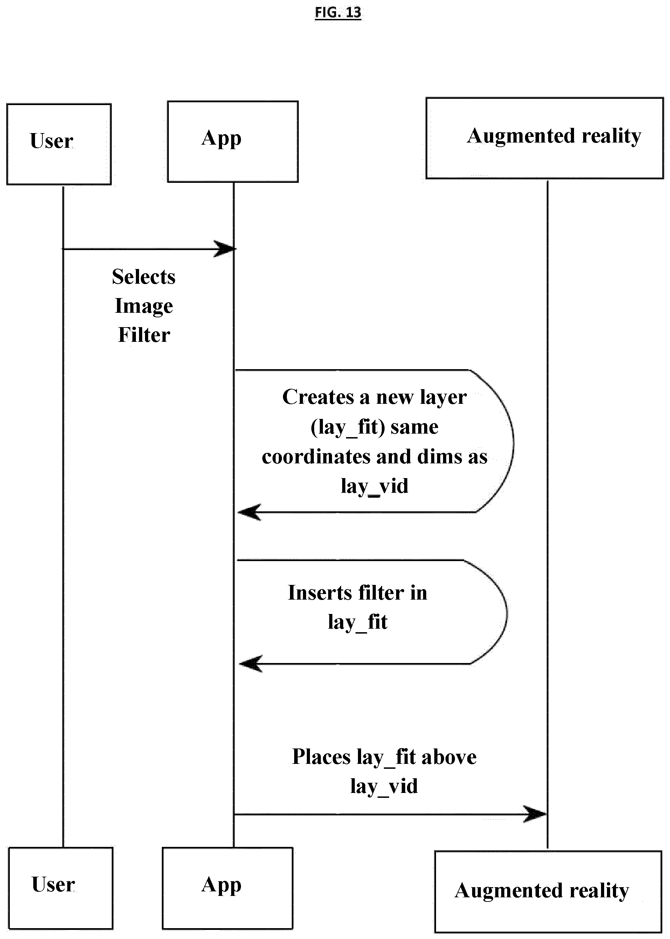

As shown in the diagram in figure 13, some filters may be selected, each of which always in the form of a further layer (lay_flt) that is superimposed on that of the video frames to add additional effects and colors (where desired).

More specifically, a filter can be selected.

The number of filter layers is at most 1. You can therefore apply the "cartoon bubble" filter that applies the cartoon effect to each frame of the video displayed on the mobile device's screen.

If, subsequently, the user wants to modify the filter, wishing to apply the "hot" filter, for example, the app then first deletes the "cartoon bubble" filter, subsequently applied, and then adds the "hot" filter.

Only one filter can therefore be selected and applied from time to time.

Ultimately, therefore, the processing goes from a minimum of three overlaid layers (real image, transparent layer and frame layers taken from the video) to four layers when a fourth layer related to filters is added.

With this software methodology, a mobile device equipped with a camera is able to animate any thing/object framed by the camera in real time and with the animation which, in real time, is processed and therefore visible to the user who is framing that thing/object.

In this invention, the frame that is printed is generally the first frame of the video, since the first frame of the video and the image must coincide in order to obtain the effect of animation. To be able to animate starting from a frame (say, the one at the i-th instant), the video should be cut so that the frame at the i-th instant becomes the first frame of the video. This is more complex from a software viewpoint, but still achievable.

## Claims

1. A method to animate an image printed and framed in real time with a mobile device, the method comprising the following steps:
- Provision of a mobile device (10) provided with a lens and a video screen (20) to show in real time the images (IMM) which are framed through said lens;
- Making a video recording and storing the said video file;
- Generation of a frame (Frame_0) from said video file;
- Printing of said frame (Frame_0);
- Real-time framing of said print through said lens of said mobile device and subsequent processing in such a way as to identify the print (PRINT_1) framed inside the full image (IMM) framed in real time and create a transparent virtual layer (Lay_virt) which is superimposed on and fastened to the print framed inside the said full image (IMM) framed in real time;
- wherein said step of creating the transparent virtual layer (Lay_virt) comprises a step of recognizing the print framed inside the said full image (IMM) framed in real time, said recognition taking place through a comparison operation between said frame (Frame_0) from which the print has been made and said full image (IMM) framed in real time, and wherein, following a positive recognition, a tracing step is provided allowing determination of the dimensions of the print framed inside the said full image (IMM) framed in real time together with its spatial coordinates (X; Y; Z) in such a way as to create said transparent virtual layer of correct size and placing the said transparent virtual layer in the right position inside the full image framed in real time so that it is perfectly overlaid on the object it corresponds to inside the said full image framed in real time;
- Identification of the video associated with said frame (Frame_0) from which the said print is taken and creation of a video layer (Lay_vid) which is superimposed on said transparent virtual layer (Lay_virt);
- The transparent virtual layer becoming a fixed reference to which the video layer is clipped;
- Activation of a sequence of frames (frame_0, frame_1, frame_n) forming the video layer and with the said frames which are scrolled in succession, being each one of said frames (frame_0, frame_1, frame_n) superimposed one by one on said transparent virtual layer (Lay_virt) in such a way as to generate animation of the framed print (IMM_1).

2. The method, according to claim 1, wherein said frame (Frame_0) generated is the first frame of the video at instant t=0.

3. The method, according to one or more of the preceding claims, wherein said virtual layer generated has the same length and width dimensions as the framed print.

4. The method, according to one or more of the preceding claims, wherein said video layer (Lay_vid) is created through the association that exists between said video and the frame from which it is taken, following positive recognition.

5. The method, according to one or more of the preceding claims, wherein said video layer (lay_vid) is a processing of the video associated with the printed frame_0.

6. The method, according to one or more of the preceding claims, wherein a further filter layer (Lay_fil) is further provided which is generated and superimposed on the video layer (Lay_vid) in such a way as to generate a predetermined effect during playback of the animation, for example a certain coloring or the application of a cartoon bubble.

7. The method, according to claim 1, wherein said video recording is produced through said mobile device.

8. The method, according to claim 1 or 7, wherein said video is stored in the memory of the mobile device or on an *in-cloud* system.

9. The method, according to claim 1 or 2, wherein said frame is saved in a directory in the mobile device's memory and is associated with the specific video from which it is taken.

10. A mobile device, preferably a smart mobile phone device or a tablet, having a processor programmed to be able to process and execute the steps of the method, according to one or more of the preceding claims 1 to 9.

11. A software program comprising instructions which, when the program is executed from a mobile device, determine the execution of the steps of the method, according to one or more of claims 1 to 9.

12. The software program according to claim 11 which can be downloaded from the internet on a mobile device.

13. The software program according to claim 11 or 12 which is in the form of an application that can be downloaded from the internet for a mobile device.

## Patentansprüche

1. Verfahren zum Animieren eines mit einem Mobilgerät in Echtzeit gedruckten und gerahmten Bildes, wobei das Verfahren die folgenden Schritte umfasst:
- Bereitstellung eines Mobilgeräts (10), das mit einem Objektiv und einem Videobildschirm (20) versehen ist, um die Bilder (IMM), die durch das Objektiv eingerahmt werden, in Echtzeit anzuzeigen;
- Erstellung einer Videoaufzeichnung und Speichern der Videodatei;
- Erzeugung eines Frames (Frame_0) aus der Videodatei;
- Drucken des Frames (Frame_0);
- Einrahmen in Echtzeit des Drucks durch das Objektiv des Mobilgeräts und anschließendes Verarbeiten, um den Druck (PRINT_1) zu identifizieren, der innerhalb des in Echtzeit gerahmten Vollbilds (IMM) gerahmt ist, und eine transparente virtuelle Ebene (Lay_virt) zu erstellen, die dem Druck, der innerhalb des Vollbildes (IMM) in Echtzeit gerahmt wird, überlagert und daran angeschlossen wird;
- wobei der Schritt zum Erstellen der transparenten virtuellen Ebene (Lay_virt) einen Schritt zum Erkennen des innerhalb des Vollbilds (IMM) in Echtzeit gerahmten Drucks umfasst, wobei die Erkennung durch einen Vergleichsvorgang zwischen dem Frame (Frame_0), aus dem der Druck gemacht wurde, und dem Vollbild (IMM), das in Echtzeit gerahmt wurde, erfolgt, und wobei nach einer positiven Erkennung ein Nachverfolgungsschritt vorgesehen ist, der die Bestimmung der Abmessungen des innerhalb des Vollbilds (IMM) in Echtzeit gerahmten Drucks zusammen mit seinen räumlichen Koordinaten (X; Y; Z) in einer solchen Weise ermöglicht, dass die transparente virtuelle Ebene mit der richtigen Größe erstellt wird und die transparente virtuelle Ebene in der richtigen Position innerhalb des Vollbilds, das in Echtzeit gerahmt wurde, platziert wird, so dass sie dem Objekt, dem sie entspricht, innerhalb des Vollbilds, das in Echtzeit gerahmt wurde, perfekt überlagert wird;
- Identifizierung des Videos, das mit dem Frame (Frame_0) assoziiert ist, aus dem der Druck entnommen wird, und Erstellung einer Videoebene (Lay_vid), die der transparenten virtuellen Ebene (Lay_virt) überlagert wird;
- Wobei die transparente virtuelle Ebene zu einer festen Referenz wird, auf die die Videoebene abgeschnitten wird;
- Aktivierung einer Folge von Frames (frame_0, frame_1, frame_n), die die Videoebene bilden, und wobei die Frames, die nacheinander gescrollt werden, jedes der Frames (frame_0, frame_1, frame_n) sind, die einzeln nacheinander der transparenten virtuellen Ebene (Lay_virt) überlagert werden, um eine Animation des gerahmten Drucks (IMM_1) zu erzeugen.

2. Verfahren nach Anspruch 1, wobei das erzeugte Frame (Frame_0) das erste Frame des Videos zum Zeitpunkt t=0 ist.

3. Verfahren nach einem oder mehreren der vorhergehenden Ansprüche, wobei die erzeugte virtuelle Ebene die gleichen Längen- und Breitenabmessungen wie der gerahmte Druck aufweist.

4. Verfahren nach einem oder mehreren der vorhergehenden Ansprüche, wobei die Videoebene (Lay_vid) durch die Assoziation erstellt wird, die zwischen dem Video und dem Frame, aus dem sie entnommen wird, nach positiver Erkennung besteht.

5. Verfahren nach einem oder mehreren der vorhergehenden Ansprüche, wobei die Videoebene (lay_vid) eine Verarbeitung des Videos ist, das mit dem gedruckten Frame_0 assoziiert ist.

6. Verfahren nach einem oder mehreren der vorhergehenden Ansprüche, wobei ferner eine weitere Filterebene (Lay_fil) vorgesehen ist, die derart erzeugt und der Videoebene (Lay_vid) überlagert wird, dass bei der Wiedergabe der Animation ein vorbestimmter Effekt erzeugt wird, beispielsweise eine bestimmte Färbung oder das Aufbringen einer Cartoon-Blase.

7. Verfahren nach Anspruch 1, wobei die Videoaufzeichnung durch das Mobilgerät produziert wird.

8. Verfahren nach Anspruch 1 oder 7, wobei das Video im Speicher des Mobilgeräts oder auf einem *In-Cloud-System* gespeichert wird.

9. Verfahren nach Anspruch 1 oder 2, wobei das Frame in einem Verzeichnis im Speicher des Mobilgeräts gespeichert wird und mit dem spezifischen Video, aus dem es entnommen wird, assoziiert wird.

10. Mobilgerät, vorzugsweise ein Smart-Mobiltelefongerät oder ein Tablet, mit einem Prozessor, der programmiert ist, um die Schritte des Verfahrens nach einem oder mehreren der vorhergehenden Ansprüche 1 bis 9 verarbeiten und ausführen zu können.

11. Softwareprogramm, das Anweisungen umfasst, die, wenn das Programm von einer Mobilgerät ausgeführt wird, die Ausführung der Schritte des Verfahrens nach einem oder mehreren der Ansprüche 1 bis 9 bestimmen.

12. Softwareprogramm nach Anspruch 11, das aus dem Internet auf ein Mobilgerät heruntergeladen werden kann.

13. Softwareprogramm nach Anspruch 11 oder 12, das in Form einer Anwendung vorliegt, die aus dem Internet für ein Mobilgerät heruntergeladen werden kann.

## Revendications

1. Procédé pour animer une image imprimée et cadrée en temps réel avec un dispositif mobile, le procédé comprenant les étapes suivantes :
- fourniture d'un dispositif mobile (10) muni d'un objectif et d'un écran vidéo (20) pour montrer en temps réel les images (IMM) qui sont cadrées par le biais dudit objectif ;
- réalisation d'un enregistrement vidéo et stockage dudit fichier vidéo ;
- génération d'une trame (Frame_0) à partir dudit fichier vidéo ;
- impression de ladite trame (Frame_0) ;
- cadrage en temps réel de ladite impression par le biais dudit objectif dudit dispositif mobile et traitement ultérieur de manière à identifier l'impression (PRINT_1) cadrée à l'intérieur de la pleine image (IMM) cadrée en temps réel et à créer une couche virtuelle transparente (Lay_virt) qui est superposée sur et attachée à l'impression cadrée à l'intérieur de ladite pleine image (IMM) cadrée en temps réel ;
- dans lequel ladite étape de création de la couche virtuelle transparente (Lay_virt) comprend une étape de reconnaissance de l'impression cadrée à l'intérieur de ladite pleine image (IMM) cadrée en temps réel, ladite reconnaissance ayant lieu par le biais d'une opération de comparaison entre ladite trame (Frame_0) à partir de laquelle l'impression a été réalisée et ladite pleine image (IMM) cadrée en temps réel, et dans lequel, à la suite d'une reconnaissance positive, une étape de traçage est fournie, permettant la détermination des dimensions de l'impression cadrée à l'intérieur de ladite pleine image (IMM) cadrée en temps réel conjointement avec ses coordonnées spatiales (X ; Y ; Z) de manière à créer ladite couche virtuelle transparente de taille correcte et le placement de ladite couche virtuelle transparente dans la bonne position à l'intérieur de la pleine image cadrée en temps réel de sorte qu'elle soit parfaitement apposée sur l'objet auquel elle correspond à l'intérieur de ladite pleine image cadrée en temps réel ;
- identification de la vidéo associée à ladite trame (Frame_0) à partir de laquelle ladite impression est extraite et création d'une couche vidéo (Lay_vid) qui est superposée sur ladite couche virtuelle transparente (Lay_virt) ;
- la couche virtuelle transparente devenant une référence fixe sur laquelle la couche vidéo est attachée ;
- activation d'une séquence de trames (frame_0, frame_1, frame_n) formant la couche vidéo et avec lesdites trames qui sont mises à défiler successivement, chacune desdites trames (frame_0, frame_1, frame_n) étant superposée une par une sur ladite couche virtuelle transparente (Lay_virt) de manière à générer une animation de l'impression cadrée (IMM_1).

2. Procédé selon la revendication 1, dans lequel ladite trame (Frame_0) générée est la première trame de la vidéo à l'instant t = 0.

3. Procédé selon l'une ou plusieurs des revendications précédentes, dans lequel ladite couche virtuelle générée possède les mêmes dimensions de longueur et de largeur que l'impression cadrée.

4. Procédé selon l'une ou plusieurs des revendications précédentes, dans lequel ladite couche vidéo (Lay_vid) est créée par le biais de l'association qui existe entre ladite vidéo et la trame à partir de laquelle elle est extraite, à la suite d'une reconnaissance positive.

5. Procédé selon l'une ou plusieurs des revendications précédentes, dans lequel ladite couche vidéo (lay_vid) est un traitement de la vidéo associée à la trame frame_0 imprimée.

6. Procédé selon l'une ou plusieurs des revendications précédentes, dans lequel une couche de filtre (Lay_fil) supplémentaire est en outre fournie, qui est générée et superposée sur la couche vidéo (Lay_vid) de manière à générer un effet prédéterminé pendant la lecture de l'animation, par exemple une certaine colorisation ou l'application d'une bulle de bande dessinée.

7. Procédé selon la revendication 1, dans lequel ledit enregistrement vidéo est produit par le biais dudit dispositif mobile.

8. Procédé selon la revendication 1 ou 7, dans lequel ladite vidéo est stockée dans la mémoire du dispositif mobile ou sur un système *en nuage.*

9. Procédé selon la revendication 1 ou 2, dans lequel ladite trame est sauvegardée dans un répertoire dans la mémoire du dispositif mobile et est associée à la vidéo spécifique à partir de laquelle elle est extraite.

10. Dispositif mobile, de préférence un dispositif téléphone mobile intelligent ou une tablette, ayant un processeur programmé pour être apte à traiter et exécuter les étapes du procédé selon l'une ou plusieurs des revendications 1 à 9 précédentes.

11. Programme logiciel comprenant des instructions qui, lorsque le programme est exécuté à partir d'un dispositif mobile, déterminent l'exécution des étapes du procédé selon l'une ou plusieurs des revendications 1 à 9.

12. Programme logiciel selon la revendication 11 qui peut être téléchargé sur internet sur un dispositif mobile.

13. Programme logiciel selon la revendication 11 ou 12 qui se présente sous la forme d'une application qui peut être téléchargée sur Internet pour un dispositif mobile.
